Europäisches Patentamt

European Patent Office

Office européen des brevets

(11) Publication number: **0 228 369**
**B1**

(12) **EUROPEAN PATENT SPECIFICATION**

(45) Date of publication of patent specification: 08.08.90

(21) Application number: 85903483.7

(22) Date of filing: 12.06.85

(86) International application number:
PCT/US85/01114

(87) International publication number:
WO 86/07471 18.12.86 Gazette 86/27

(51) Int. Cl.⁵: **G 03 B 1/04, G 03 B 1/56,**
**G 11 B 15/00, G 11 B 15/32,**
**G 11 B 17/00, G 03 C 1/76,**
**G 03 D 13/10**

(54) **MEANS FOR PULLING TAPE FROM A REEL.**

(43) Date of publication of application:
15.07.87 Bulletin 87/29

(45) Publication of the grant of the patent:
08.08.90 Bulletin 90/32

(84) Designated Contracting States:
AT BE CH DE FR GB IT LI LU NL SE

(56) References cited:
US-A-1 655 297
US-A-3 136 464
US-A-3 153 516
US-A-3 706 423
US-A-4 090 680
US-A-4 244 640

No relevant documents have been disclosed.

(73) Proprietor: **DIGITAL EQUIPMENT**
**CORPORATION**
**146 Main Street**
**Maynard, MA 01754 (US)**

(72) Inventor: **HERTRICH, Friedrich, R.**
**Sugar Loaf Star Route**
**Boulder, CO 80302 (US)**

(74) Representative: **Mongrédien, André et al**
**c/o SOCIETE DE PROTECTION DES INVENTIONS**
**25, rue de Ponthieu**
**F-75008 Paris (FR)**

Courier Press, Leamington Spa, England.

## Description

In tape handling devices it is necessary to have a reel which is "taking up," or winding, the tape which is being pulled from a supply reel. Very often, in the prior art, the take up reel and the supply reel are interchangeable, depending on which way the tape is being driven. In such an arrangement both reels are often located in one housing, a cassette, and there is no need to "start," or load, a tape onto a take up reel.

However there are some applications in the prior art where the supply reel is provided as an entity unto itself and the tape thereon is pulled therefrom by an "empty" take up reel. A film on a motion picture projector is a typical example of the last mentioned prior art arrangement. Other uses of this kind are well known. In the prior art, with such arrangements, there has always been a certain amount of human factor involved. For instance in a movie projector arrangement, the film is threaded along a group of sprocketed drivers and idlers. In some other arrangements the tape is pulled from the supply reel and "grabbed" by a vacuum port on the take up reel. In another arrangement the tape is pulled from the supply reel and hand loaded into a take up reel whereat there is a sheath, which, in response to movement of the take up reel, operates to squeeze the tape and hold it in position while the tape winds on itself.

The present arrangement provides two tape leaders which are designed to be automatically, and readily, locked, or buckled, together. In my co-pending patent application entitled, "A Mechanism for Joining Tape Leaders", serial No. 578,766, I teach and claim a mechanism to be used with the two tape leaders described and claimed in the present patent application.

Applicant acknowledges that U.S. patent No. 3,706,423 is also part of the relevant prior art to the invention described herein. However, U.S. patent No. 3,706,423 unlike the present invention, teaches that the supply leader has a tab section and the take up leader has a locking section so that the tape must be negatively rolled to lock the leaders before pulling tape from the supply reel. Further, U.S. patent No. 3,706,423 does not disclose the provision of a locating feature in the take up tape leader which cooperates with positioning means in the tape winding mechanism to promote the coupling of the tape leaders.

In the present arrangement there is included a first tape leader which in a preferred embodiment is identified with the take up reel. The first tape leader is formed at one end to have an enlarged tab which is supported by a stem portion. The other end of the first tape leader is formed to be fastened to a take up reel so that when the take up reel is wound the first tape leader will wind on itself. In addition in the present arrangement there is included a second tape leader which in a preferred embodiment is identified with a supply reel. The second tape leader is formed to have a locking aperture at one end and a means to be secured to a tape to be pulled at the other end. The locking aperture is designed to have a relatively wide section through which the enlarged tab can pass, or be pushed. In addition the locking aperture has a relatively narrow section which will not pass the enlarged tab but which will accept the stem portion. Accordingly when the tab is passed through the locking aperture it can be moved toward the narrow section (the stem being permitted to move through the narrow section) until the enlarged tab bumps into the sides of the narrow section thus locking the first tape leader with the second tape leader. At the point, or area, where the enlarged tab is locked by the narrow section there are extensions, or bumps, on either side of the second tape leader. In order to effect a smooth wrap around of the two leaders, (so that a distortion of the tape does not result from winding the tape from the supply reel around locked leaders having bumps), the two leaders are provided with smoothing apertures. The smoothing apertures are located, one each in respectively said first and second tape leaders, such that the extensions, or bumps, are fitted into the smoothing apertures and hence the wrap around of the leaders is smooth. The take up reel leader has a locating aperture in close proximity to the enlarged table so that the mechanism described in my co-pending application, mentioned above, or some other tool can be used to position the take up leader for automatic coupling to said supply reel tape leader.

The objects and features of the present invention can be better understood in view of the following description taken in conjunction with the drawings, wherein:

Figure 1 depicts the enlarged tab of the first leader being initially moved through the wide section of the locking aperture;

Figure 2 shows the relationship of the enlarged tab as it moves to be locked by the narrow section;

Figure 3 shows the enlarged tab in the locked position in the narrow section of the locking aperture; and

Figure 4 is a side, partially cross-sectioned, view of the two leaders wrapped on a take up reel.

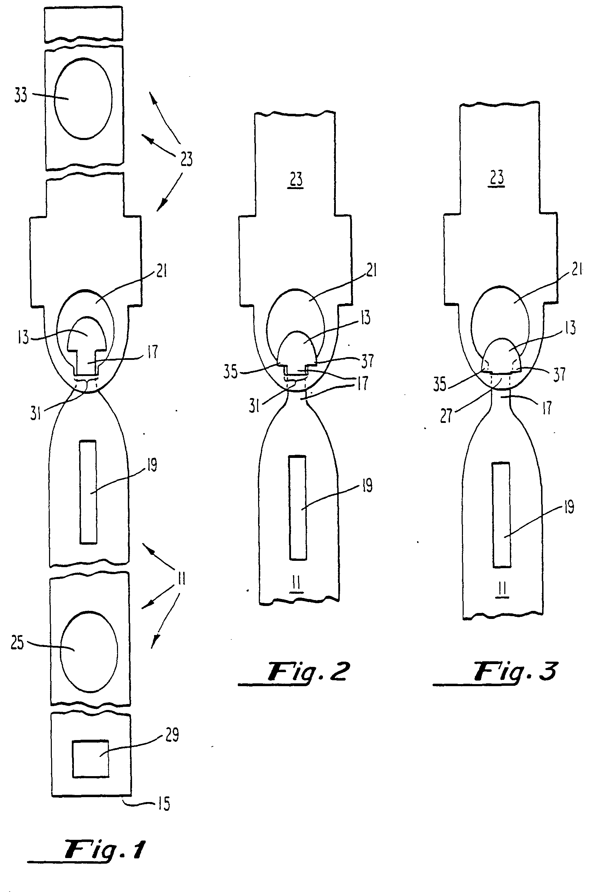

Consider Figure 1. In Figure 1 there is shown a tape leader 11 which is broken into sections to simplify the drawing. Actually the leader 11 is one continuous piece of material from the enlarged tab 13 to the end 15.

As can be seen in Figure 1, one end of the tape leader 11 is formed into an enlarged tab 13 which is supported by a stem portion 17. The enlarged tab in a preferred embodiment is shaped to closely resemble a mushroom. Other shapes could be used.

In close proximity to the enlarged tab 13 there is formed a locating aperture 19. The locating aperture 19 is used to enable a tool (such as the type mentioned in my corresponding application, above) to be inserted therein so that the enlarged tab 13 can be moved into a position to be readily (and automatically) pushed through the locking aperture 21 of the supply reel leader 23. Also within the take up reel leader 11 there is formed a first smoothing aperture 25. When the enlarged tab 13 is in the locked position, as shown in Figure 3, the stem 17 bulges out from the supply reel tape leader 23. The bump resulting from the above described bulging occurs in the region 27 (Figure 3) of the tape leader 23, but away from viewer looking at Figure 3. In addition when the enlarged tab 13 is in the locked position, as shown in Figure 3, the enlarged tab 13 extends out from locking aperture 21, toward the viewer looking at Figure 3. The bump resulting at section 27 fits into the smoothing aperture 25 when the take up reel leader 11 is wrapped around the take up reel.

Finally there is formed a securing aperture 29 formed in close proximity to the second end 15 of the tape leader 11. The securing aperture 29 permits the leader 11 to be fastened to the take up reel so that the tape leader 11 moves with the take up reel.

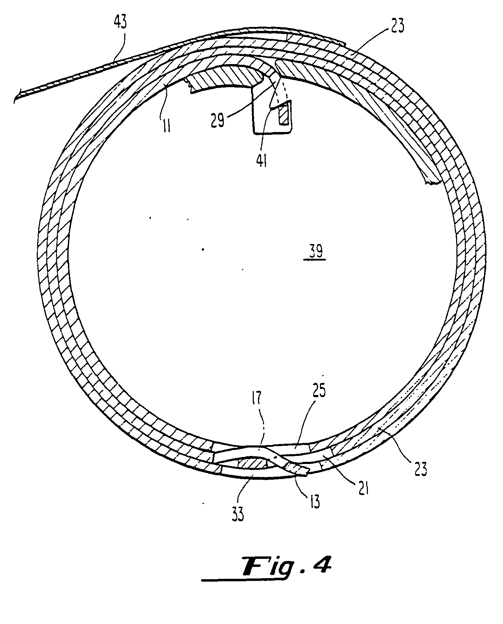

As can be further gleaned from Figure 1 the locking aperture 21 is formed to have a wide section through which the enlarged tab 13 can pass. In addition the locking aperture 21 has a narrow section 31. The narrow section 31 is wide enough to permit the stem 17 to pass therethrough but is narrow enough to block the enlarged tab 13 from passing therethrough. In the tape leader 23 there is also formed a smoothing aperture 33. As mentioned above the enlarged tab 13 extends away from locking aperture when the two leaders are locked as shown in Figure 3. The smoothing aperture 33 accepts the enlarged tab 13 when the two leaders are wrapped around the take up reel. The foregoing is better appreciated from Figure 4 which will be discussed hereinafter.

If we examine Figures 1, 2 and 3 the lock up procedure can be readily understood. In Figure 1 the initial position is shown where the enlarged tab 13 is located opposite the wide portion of the locking aperture 21. The enlarged tab 13 is pushed (by a cam or otherwise) well into the locking aperture 21. Thereafter, as shown in Figure 2, the take up reel leader is pulled in the direction of rotation of the take up reel. To say it another way the tab 13 is moved toward the narrow section 31. In this intermediate step the extensions 35 and 37 slide over the sides of the locking aperture near the narrow section 31 and hence the tab 13 becomes locked in. As the tape leader 11 is moved further in the direction of rotation of the take up reel the tab 13 becomes firmly locked with the leader 23 as depicted in Figure 3.

Figure 4 shows a side view, partially sectionalized, of the two leaders wrapped around the take up reel 39. In Figure 4 the aperture 29 is shown secured to a finger 41. If the leader 11 is followed around the wrapped position the smoothing aperture 25 can be seen. As can be recognized in Figure 4 the bump created by the stem 17 (as described above) is shown fitting into the smoothing aperture 25. If the tape leader 11 is followed around the second layer, the extension of the tab 13 into the locking aperture 21 becomes apparent. If the leader 23 is followed around becoming layer 3 the smoothing aperture 33 is recognized. As can be seen in Figure 4, the extension, or bump, formed by the tab 13 fits into the smoothing aperture 33. As can be gleaned from Figure 4 the two leaders 11 and 23 are wrapped around the take up reel 39 in a smooth fashion.

As can be further gleaned from Figure 4 the tape to be pulled, tape 43 is secured to the leader 23 by adhesive material such as rubberized adhesive or the like. Other forms of adhesive or other forms of securing the tape 43 to the leader 23 can be used.

The present arrangement of the two tape leaders, formed as described above enables a means to pull a tape to be automatically coupled to a tape to be pulled. In a preferred embodiment the tape leaders are fabricated from a polyester material and are approximately .004 to .010 mils thick. Other materials and thicknesses may be used.

**Claims**

1. Device for enabling a take up reel (39) to pull tape (43) from a supply tape reel, including a take up leader (11) coupled to said take up reel (39), said take up leader (11) having first and second ends, said second end of which being coupled to said take up reel, a supply tape leader (23) being connected to said tape (43), and said supply tape leader (23) having first and second ends, characterized by:

said first end of said take up leader (11) having an enlarged section (13) supported by a relatively thin stem section (17);

means, preferably adhesives, for securing said second end of said supply tape leader (23) to said tape (43);

a locking aperture (21) formed in the first end of said supply tape leader (23);

said locking aperture (21) having a first portion adapted to permit the passage of said enlarged section (13) of said take up leader therethrough and a second smaller portion positioned away from said second end of said supply tape leader (23) being adapted to prevent passage of said enlarged section (13) of said take up leader therethrough such that after passage of said enlarged section through said first portion of said locking aperture (21) and after a forward movement of the take up reel (39) and resultant movement of said take up leader (11) relative to said supply tape leader (23) said enlarged section (13) and said stem section (17) are urged from the first portion into said second portion of said locking aperture (21) whereby said stem and enlarged sections become locked with said second portion of said locking aperture; and

a locating aperture in close proximity to the enlarged tab (13), (19) being formed in said take up leader whereby said supply tape leader and said take up leader (23, 11) are oriented and positioned such that, in response to means for positioning, said enlarged section of said take up leader (11) passes through said first portion of said locking aperture (21) after relative movement of said first end of said take up leader with respect to said first end of said supply tape leader wherein said locating aperture (19) is adapted to accept a tool included in said means for positioning, and whereby in response to said tool the enlarged section (13) of said take up leader is tilted and pushed through said locking aperture (21).

2. The device of claim 1 wherein supply tape leader (23) and said take up leader (11) have apertures (29, 33) therein which promote smooth wrapping of said supply tape leader over said take up leader on said take up reel (39) after said take up leaders have been joined.

3. The device of claim 1 wherein said supply tape leader is provided with extending shoulder proximate to the locking aperture (21) for aiding in the positioning and orientation of the respective ends of said tape leaders (19, 23).

**Patentansprüche**

1. Einrichtung zum Abziehen eines Bands (43) von einer Zuführrolle mittels einer Aufwickelrolle (39), mit einem mit der Aufwickelrolle (39) gekoppelten Aufwickel-Führungsteil (11), welcher Führungsteil (11) erste und zweite Enden aufweist, wovon das zweite Ende mit der Aufwickelrolle gekoppelt ist, sowie mit einem mit dem Band (43) verbundenen Zuführ-Führungsteil (23) mit einem ersten und einem zweiten Ende, gekennzeichnet durch

einen vergrößerten Abschnitt (13) am ersten Ende des Aufwickels-Führungsteils (11), welcher durch einen relativ dünnen Stegabschnitt (17) getragen wird;

Mittel zum Befestigen des zweiten Endes des Zuführ-Führungsteils (23) an dem Band (43), welche Mittel vorzugsweise Klebstoffe sind;

eine Einhängeöffnung (21) in dem ersten Ende des Zuführ-Führungsteils (23);

welche Einhängeöffnung (21) einen ersten Teil aufweist, der den Durchtritt des vergrößerten Abschnitts (13) des Aufwickel-Führungsteils ermöglicht, und der einen zweiten kleineren Teil in einem Abstand von dem zweiten Ende des Zuführ-Führungsteils (23) aufweist, um einen Durchtritt des vergrößerten Abschnitts (13) des Aufwickels-Führungsteils zu verhindern, so daß nach dem Durchtritt des vergrößerten Abschnitts durch den ersten Teil der Einhängeöffnung (21) und nach einer Vorwärtsbewegung der Aufwickelrolle (39) und einer resultierenden Bewegung des Aufwickel-Führungsteils (11) relativ zu dem Zuführ-Führungsteil (23) der vergrößerte Abschnitt (13) und der Stegabschnitt (17) vom dem ersten Teil in den zweiten Teil der Einhängeöffnung (21) gezogen werden, wodurch der Stegabschnitt und der vergrößerte Abschnitt mit dem zweiten Teil der Einhängeöffnung verriegelt werden; und durch

eine der der Nähe des vergrößerten Abschnitts (13) in dem Aufwickel-Führungsteil ausgebildete lokalisierende Öffnung (19), wodurch der Zuführ-Führungsteil (23) und der Aufwickel-Führungsteil (11) orientiert und derart positioniert werden, daß in Abhängigkeit von einer Positionierungseinrichtung der vergrößerte Abschnitt des Aufwickel-Führungsteils (11) durch den ersten Teil der Einhängeöffnung (21) nach einer relativen Bewegung des ersten Endes des Aufwickels-Führungsteils verläuft, wobei die lokalisierende Öffnung (19) die Benutzung eines werkzeugs zulassen kann, das in der Positionierungseinrichtung enthalten ist, und wobei in Abhängigkeit vom dem Werkzeug der vergrößerte Abschnitt (13) des Aufwickel-Führungsteils gekippt und durch die Einhängeöffnung (21) geschoben wird.

2. Einrichtung nach Anspruch 1, wobei der Zuführ-Führungsteil (23) und der Aufwickel-Führungsteil (11) Öffnungen (29, 33) aufweisen, welche eine glatte Umhüllung mit dem Zuführ-Führungsteil über dem Aufwickel-Führungsteil auf der Aufwickelrolle (39) nach Verbindung der Aufwickel-Führungsteile ermöglichen.

3. Einrichtung nach Anspruch 1, wobei der Zuführ-Führungsteil mit einer vorragenden Schulter unmittelbar anschließend und die Einhängeöffnung (21) versehen ist, um zu der Positionierung und Orientierung der betreffenden Enden der Band-Führungsteile (19, 23) beizutragen.

**Revendications**

1. Dispositif pour permettre à une bobine de rembobinage (39) de tirer une bande (43) à partir d'une bobine d'alimentation, incluant une amorce de rembobinage (11) couplée à ladite bobine de rembobinage (39), ladite amorce (11) de rembobinage ayant une première et une seconde extrémités, ladite seconde extrémité de celleci étant couplée à ladite bobine de rembobinage, une amorce de bande d'alimentation (23) étant connectée à ladite bande (43), et ladite amorce de bande d'alimentation (23) ayant une première et une seconde extrémités, caractérisé par:

ladite première extrémité de ladite amorce de rembobinage (11) ayant une section élargie (13) portée par une section formant tige relativement mince (17);

des moyens, de préférence adhésifs, pour fixer ladite seconde extrémité de ladite amorce de bande d'alimentation (23) à ladite bande (43);

une ouverture de blocage (21) formée dans la première extrémité de ladite amorce de bande d'alimentation (23);

ladite ouverture de blocage (21) ayant une première partie adaptée pour permettre le passage de ladite section élargie (13) de ladite amorce de rembobinage à travers elle et une seconde partie plus petite placée loin de ladite seconde extrémité de ladite amorce de bande d'alimentation (23) étant adaptée pour empêcher le passage de ladite section élargie (13) de ladite amorce de rembobinage à travers elle de façon à ce que, après le passage de ladite section élargie à travers ladite première partie de ladite ouverture de blocage (21) et après un mouvement vers l'avant de la bobine de rembobinage (39) et un mouvement résultant de ladite amorce de rembobinage (11) par rapport à ladite amorce de la bande d'alimentation (23), ladite section élargie (13) et ladite section formant tige (17) sont poussées de la première partie à l'intérieur de ladite seconde partie de ladite ouverture de blocage (21), de telle sorte que lesdites sections formant tige et élargie se bloquent avec ladite seconde partie de ladite ouverture de blocage; et

une ouverture de positionnement (19) dans le proche voisinage de la patte élargie (13) étant formée dans ladite amorce de rembobinage, de telle sorte que ladite amorce de la bande d'alimentation et ladite amorce de rembobinage (23, 11) sont orientées et positionnées de façon à ce que, en réponse à des moyens de positionnement, ladite section élargie de ladite amorce de rembobinage (11) passe à travers ladite première partie de ladite ouverture de blocage (21) après un mouvement relatif de ladite première extrémité de ladite amorce de rembobinage par rapport à ladite première extrémité de ladite amorce de la bande d'alimentation dans laquelle ladite ouverture de positionnement (19) est adaptée pour recevoir un outil inclus dans lesdits moyens de positionnement et de telle sorte que, en réponse audit outil, la section élargie (13) de ladite amorce de rembobinage est inclinée et poussée à travers ladite ouverture de blocage (21).

2. Dispositif selon la revendication 1, dans lequel l'amorce de la bande d'alimentation (23) et ladite amorce de rembobinage (11) ont des ouvertures (29, 33) qui facilitent l'enroulement lisse de ladite amorce de la bande d'alimentation au-dessus de ladite amorce de rembobinage sur ladite bobine de rembobinage (39) après que lesdites amorces de rembobinage aient été reliées.

3. Dispositif selon la revendication 1, dans lequel ladite amorce de la bande d'alimentation est fournie avec un épaulement s'étendant près de l'ouverture de blocage (21) pour aider dans le positionnement et l'orientation des extrémités respectives desdites amorces de bande (19, 23).

_Fig.1_

_Fig.2_

_Fig.3_

_Fig . 4_